# EUROPEAN PATENT APPLICATION

(11) **EP 4 796 964 A1**
(43) Date of publication of application: **26.08.2026**
(21) Application number: 24879809.2
(22) Date of filing: 18.10.2024
(51) Int. Cl.: G02B 6/02, G02B 6/036, G02B 6/43, G02B 6/44

(54) **OPTICAL FIBER COMMUNICATION SYSTEM, PLASTIC OPTICAL FIBER CABLE, AND ACTIVE OPTICAL CABLE**

(30) Priority: 19.10.2023 JP 2023180468
(71) Applicant: ASAHI KASEI KABUSHIKI KAISHA, Tokyo 100-0006 (JP)
(72) Inventor: OKITA Koshi, Tokyo 100-0006 (JP)
(74) Representative: Strehl & Partner mbB
(86) International application number: PCT/JP2024/037127
(87) International publication number: WO 2025/084389

(57) **Abstract**

An optical fiber communication system including: a plastic optical fiber cable 10; a light-emitting element 3, 3' composed of a micro LED array including a (a ≥ 2) micro LEDs; and a light-receiving element 4, 4' composed of a photodiode array including a or more photodiodes, wherein the plastic optical fiber cable 10 further includes a covering layer on an outer side of a plastic optical fiber composed of two or more cores and a first clad layer surrounding the cores, b (a ≤ b) or more cores of the two or more cores are effective cores that receive light from the light-emitting element, the cores are composed of an acrylic resin, and a static bending loss of the plastic optical fiber cable 10 at a bending radius r = 3 mm is equal to or smaller than 0.2 dB.

## Description

### Technical Field

The present invention relates to an optical fiber communication system, a plastic optical fiber cable, and an active optical cable.

### Background Art

Conventionally, an optical fiber communication system in which a micro LED array including micro LEDs is used as a light-emitting element and a photodiode array is used as a light-receiving element has been used for optical data communication. Such an optical fiber communication system has an advantage in that a large amount of optical data can be communicated by providing a plurality of micro LEDs in the light-emitting element (for example, refer to Patent Document 1).

### List of Prior Art Documents

### Patent Document

Patent Document 1: U.S. Patent No. 11476942

### Summary of Invention

### Problems to be Solved by Invention

However, in conventionally known optical fiber communication systems, optical fibers constituting an optical fiber cable for optical data communication have a single core or have a smaller number of cores than the number of micro LEDs of the light-emitting element, and thus it is necessary to convert a large amount of data into light to be transmitted in accordance with an amount of data to be communicated, resulting in problems in that power consumption is increased and cost is increased.

In addition, in the optical fiber communication system, optical fibers are often bent and installed in equipment; however, in a case where an optical fiber cable including optical fibers made of glass is used, there is a problem in that a transmission failure may occur due to breakage.

In view of such problems, multicore plastic optical fibers suitable for image transmission and having a larger number of cores than conventional optical fibers for optical data communication are known; however, in general, plastic optical fibers suffer from an increase in optical loss as a bending radius increases, resulting in a shortened communication distance, and thus there remains a problem in that there is still room for improvement in bending loss when such optical fibers are bent.

Accordingly, an object of the present invention is to provide an optical fiber communication system that uses a micro LED array including micro LEDs as a light-emitting element and a photodiode array as a light-receiving element, the optical fiber communication system including a plastic optical fiber cable that is excellent in mechanical strength resistance to bending, has a small number of communication errors, and is also excellent in cost reduction.

### Means for Solving Problems

The inventors of the present invention have conducted intensive studies to solve the above-described problems, and as a result, have found that the above-described problems of the conventional technology can be solved by specifying a relation between the number of micro LEDs constituting a light-emitting element of an optical fiber communication system and the number of cores of plastic optical fibers constituting a light-receiving element, and by specifying a static bending loss at a bending radius r = 3 mm, thereby completing the present invention.

That is, the present invention is as follows.
[1] An optical fiber communication system including:
   a plastic optical fiber cable;
   a light-emitting element composed of a micro LED array including a (a ≥ 2) micro LEDs; and
   a light-receiving element composed of a photodiode array including a or more photodiodes, wherein
   the plastic optical fiber cable further includes a covering layer on an outer side of a plastic optical fiber composed of two or more cores and a first clad layer surrounding the cores,
   b (a ≤ b) or more cores of the two or more cores are effective cores that receive light from the light-emitting element,
   the cores are composed of an acrylic resin, and
   a static bending loss of the plastic optical fiber cable at a bending radius r = 3 mm is equal to or smaller than 0.2 dB.
[2] The optical fiber communication system according to [1] described above, wherein the a and the b satisfy 2a ≤ b ≤ 40a.
[3] The optical fiber communication system according to [1] described above, wherein the a and the b satisfy 3a ≤ b ≤ 10a.
[4] The optical fiber communication system according to [1] described above, wherein the a and the b satisfy 3a ≤ b ≤ 5a.
[5] The optical fiber communication system according to any one of [1] to [4] described above, wherein an average thickness of the first clad layer is 0.5 µm to 5 µm.
[6] The optical fiber communication system according to any one of [1] to [5] described above, wherein a cross-sectional area ratio between the core and the first clad layer (core/first clad layer) is 99/1 to 70/30.
[7] The optical fiber communication system according to any one of [1] to [6] described above, wherein the first clad layer is composed of one or more resins selected from the group consisting of (1) tetrafluoroethylene-vinylidene fluoride copolymer, (2) fluoromethacrylate-based polymer, and (3) ethylene-tetrafluoroethylene-based copolymer.
[8] The optical fiber communication system according to any one of [1] to [7] described above, including:
   a second clad layer surrounding the first clad layer, wherein
   the second clad layer is composed of a fluororesin that is different from a resin constituting the first clad layer.
[9] The optical fiber communication system according to any one of [1] to [7] described above, including:
   a second clad layer surrounding the first clad layer, wherein
   the second clad layer is composed of a non-fluororesin that is different from a resin constituting the first clad layer.
[10] The optical fiber communication system according to [8] described above, wherein a refractive index of the second clad layer is lower than a refractive index of the first clad layer.
[11] **The optical** fiber communication system according to [9] described above, wherein a refractive index of the second clad layer is lower than a refractive index of the first clad layer.
[12] The optical fiber communication system according to any one of [1] to [11] described above, including independent third clad layers around the respective cores.
[13] The optical fiber communication system according to any one of [1] to [12] described above, wherein a refractive index (n) of the first clad layer satisfies 1.38 ≤ n ≤ 1.48.
[14] The optical fiber communication system according to any one of [1] to [13] described above, wherein
   the covering layer is composed of
   a resin selected from the group consisting of a polyethylene-based resin, a flame-retardant polyethylene-based resin, a polyamide-based resin, and a vinyl chloride-based resin.

A plastic optical fiber cable used in an optical fiber communication system, the optical fiber communication system including a plastic optical fiber cable, a light-emitting element composed of a micro LED array including a (a ≥ 2) micro LEDs, and a light-receiving element composed of a photodiode array including a or more photodiodes, the plastic optical fiber cable including:
a plastic optical fiber composed of two or more cores and a first clad layer surrounding the cores, and a covering layer on an outer side of the plastic optical fiber, wherein
b (a ≤ b) or more cores of the two or more cores are effective cores that receive light from the light-emitting element,
the cores are composed of an acrylic resin, and
a static bending loss at a bending radius r = 3 mm is equal to or smaller than 0.2 dB.

An active optical cable equipped with the optical fiber communication system according to any one of [1] to [14] described above.

### Advantages of Invention

According to the present invention, it is possible to provide an optical fiber communication system that uses a micro LED array including micro LEDs as a light-emitting element and a photodiode array as a light-receiving element, the optical fiber communication system including a plastic optical fiber cable that is excellent in mechanical strength resistance to bending, has a small number of communication errors, and is also excellent in cost reduction.

### Brief Description of Drawings

[Figure 1] Figure 1 is a schematic configuration diagram of an example of an optical fiber communication system of the present embodiment.
[Figure 2] Figure 2 is a schematic configuration diagram of an example of a transmitting and receiving element constituting the optical fiber communication system.
[Figure 3] Figure 3 is a schematic cross-sectional view of an example of a plastic optical fiber cable.
[Figure 4] Figure 4 is a schematic cross-sectional view of another example of the plastic optical fiber cable.
[Figure 5] Figure 5 is a schematic cross-sectional view of another example of the plastic optical fiber cable.
[Figure 6] Figure 6 is a schematic cross-sectional view of another example of the plastic optical fiber cable.

### Mode for Carrying Out Invention

The following describes an embodiment for implementing the present invention (hereinafter, simply referred to as the "present embodiment") in detail with reference to the drawings as necessary, but the present invention is not limited to the following embodiment. The present invention can be variously modified and implemented within the scope of the gist of the present invention.

### [Optical fiber communication system]

An optical fiber communication system of the present embodiment is an optical fiber communication system including:
a plastic optical fiber cable;
a light-emitting element composed of a micro LED array including a (a ≥ 2) micro LEDs; and
a light-receiving element composed of a photodiode array including a or more photodiodes.

The plastic optical fiber cable further includes a covering layer on an outer side of a plastic optical fiber composed of two or more cores and a first clad layer surrounding the cores, wherein b (a ≤ b) or more cores of the two or more cores are effective cores that receive light from the light-emitting element, and the cores are composed of an acrylic resin.

The plastic optical fiber cable has a static bending loss equal to or smaller than 0.2 dB at a bending radius r = 3 mm.

The above-described "effective core" refers to a core that receives light emitted from the light-emitting element when optical communication is performed by using the optical fiber communication system of the present embodiment. In the light-emitting element, the light-receiving element, and the plastic optical fiber cable, depending on combinations of sizes thereof and the like, when optical communication is performed by using the optical fiber communication system of the present embodiment, there may be a core that is in a state of not being used for communication; however, such a core in a state of not being used for communication is not regarded as the "effective core" described above.

According to the above-described configuration, it is possible to provide an optical fiber communication system including a plastic optical fiber cable that is excellent in strength resistance to bending and in reduction of bending loss, has a small number of communication errors, and is also excellent in cost reduction.

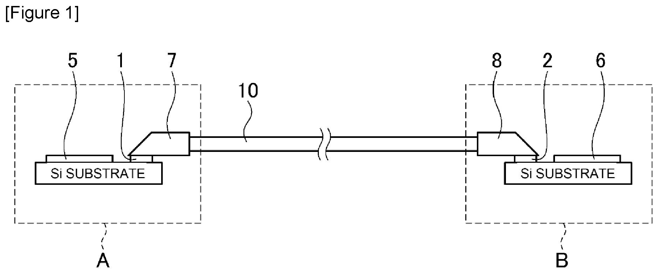

Figure 1 illustrates a schematic diagram of an example of an optical fiber communication system of the present embodiment.

The optical fiber communication system illustrated in Figure 1 includes transmitting and receiving units A and B at both ends of a plastic optical fiber cable (hereinafter, also referred to as a plastic optical fiber cable of the present embodiment in some cases) 10 having two or more cores, the transmitting and receiving units A and B converting predetermined data into light and transmitting and receiving the light and the data.

The transmitting and receiving units A and B respectively include transmitting and receiving elements 1 and 2 that are each provided on a predetermined Si substrate and each include a light-emitting element composed of a micro LED array and a light-receiving element composed of a photodiode array.

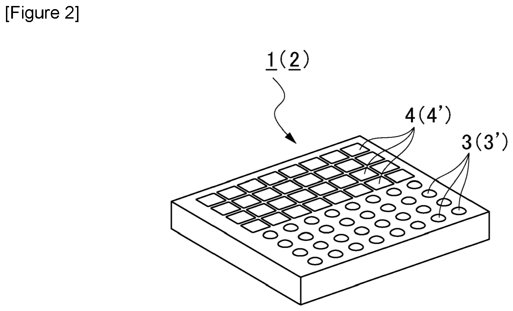

As illustrated in Figure 2, the transmitting and receiving elements 1 and 2 each include light-emitting elements 3 (3') composed of a micro LED array including a (a ≥ 2) micro LEDs, and light-receiving elements 4 (4') composed of a photodiode array including a or more photodiodes.

Note that the light-emitting element of the transmitting and receiving element 1 is denoted by 3, and the light-receiving element thereof is denoted by 4. In addition, the light-emitting element of the transmitting and receiving element 2 is denoted by 3', and the light-receiving element thereof is denoted by 4'.

On the Si substrates, IC chips 5 and 6 each having a function of converting predetermined data into light are respectively mounted.

In the optical fiber communication system, predetermined data is converted into light by the IC chip 5 on the transmitting and receiving unit A side, and the light emitted from the light-emitting element 3 composed of a micro LED array travels through the plastic optical fiber cable 10 via a predetermined optical refraction device 7 and reaches the light-receiving element 4' composed of a photodiode array on the transmitting and receiving unit B side. Similarly, on the transmitting and receiving unit B side, predetermined data is converted into light by the IC chip 6, and the light emitted from the light-emitting element 3' composed of a micro LED array travels through the plastic optical fiber cable 10 via a predetermined optical refraction device 8 and is transmitted to the light-receiving element 4 composed of a photodiode array on the transmitting and receiving element 1 side.

A configuration of the optical fiber communication system of the present embodiment is not limited to the configuration illustrated in Figure 1. Although Figure 1 illustrates a configuration including one plastic optical fiber cable 10, the configuration may include, for example, two or more plastic optical fiber cables 10.

Specifically, in a case where two plastic optical fiber cables are provided, a configuration may be adopted in which a first plastic optical fiber cable couples the light-emitting element 3 of the transmitting and receiving element 1 with the light-receiving element 4' of the transmitting and receiving element 2, and a second plastic **optical** fiber cable couples the light-receiving element 4 of the transmitting and receiving element 1 with the light-emitting element 3' of the transmitting and receiving element 2.

By adopting a configuration including one plastic optical fiber cable 10, there is an advantage in that the overall configuration of the optical fiber communication system is simplified; however, in order to secure a desired communication amount, it is necessary to increase the number of cores of the plastic optical fiber cable, and high transmission performance is required.

On the other hand, although adopting a configuration including two plastic optical fiber cables 10 complicates the overall configuration of the optical fiber communication system, a desired communication amount can be secured with the number of cores of each of the plastic optical fiber cables being half that in a case of a single cable.

In addition, the transmitting and receiving elements 1 and 2 constituting the optical fiber communication system of the present embodiment are not limited to the configuration illustrated in Figure 2, and may include the light-emitting element 3 (3') and the light-receiving element 4 (4') within a single chip as illustrated in Figure 2, or may have a configuration in which the light-emitting element and the light-receiving element are mounted on separate chips.

The optical fiber communication system of the present embodiment includes the light-emitting element composed of a micro LED array including a (a ≥ 2) micro LEDs and the light-receiving element composed of a photodiode array including a or more photodiodes, and furthermore, the plastic optical fiber cable has b (a ≤ b) or more of the effective cores, so that a large amount of data corresponding to a desired data amount to be communicated can be converted into light to be transmitted and received in a short time. As a result, data transmission and reception can be performed in a short time and with low power consumption, and cost reduction can be achieved.

In the optical fiber communication system of the present embodiment, the number a (a ≥ 2) of the micro LEDs constituting the light-emitting element 3 and the number b (a ≤ b) of the effective cores constituting the plastic optical fiber cable 10 preferably satisfy 2a ≤ b ≤ 40a, more preferably satisfy 3a ≤ b ≤ 10a, and even more preferably satisfy 3a ≤ b ≤ 5a, from a viewpoint of transmitting and receiving communication data at high speed and low cost.

By setting 2a ≤ b, it is possible to reduce a burden of precise alignment when combining the plastic optical fiber cable and the transmitting and receiving element. By setting 3a ≤ b, an effect of further reducing crosstalk can be obtained.

On the other hand, as the number of effective cores increases, an amount of light blocked by a clad layer constituting the plastic optical fiber cable increases and an amount of incident light decreases, whereby a communication distance is shortened; therefore, b ≤ 40a is preferable, b ≤ 10a is more preferable, and b ≤ 5a is even more preferable.

### (Plastic optical fiber cable)

The plastic optical fiber cable of the present embodiment is a plastic optical fiber cable for use in an optical fiber communication system, the optical fiber communication system including a light-emitting element composed of a micro LED array including a (a ≥ 2) micro LEDs and a light-receiving element composed of a photodiode array including a or more photodiodes.

The plastic optical fiber cable of the present embodiment is a multicore optical fiber cable having two or more cores, and further includes a covering layer on an outer side of the plastic optical fiber composed of the first clad layer surrounding the cores. The first clad layer surrounds the two or more cores, and a refractive index of the first clad layer is preferably lower than that of the cores.

Of the two or more cores, b (a ≤ b) or more cores are effective cores that receive light from the light-emitting element.

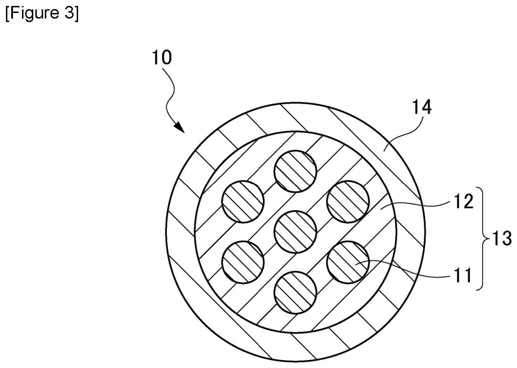

Figure 3 illustrates a schematic cross-sectional view of an example of the plastic optical fiber cable of the present embodiment.

As illustrated in Figure 3, the plastic optical fiber cable 10 of the present embodiment is a multicore optical fiber cable having a plurality of cores 11.

The plastic optical fiber cable 10 illustrated in Figure 3 has seven cores, but the present embodiment is not limited to this example.

The plastic optical fiber cable 10 is formed as a multicore cable by covering the cores 11 with a first clad layer 12. That is, the first clad layer 12 surrounds an entirety of the two or more cores 11 and a periphery of each of the cores 11. A covering layer 14 is formed on an outer periphery of the first clad layer 12.

In this case, the cores 11 and the first clad layer 12 are collectively referred to as a plastic optical fiber 13.

An outer covering layer (not illustrated) may be further provided on an outer periphery of the covering layer 14. Due to this, the plastic optical fiber 13 can be more reliably protected from influences of long-term outdoor use, chemicals that come into contact therewith, or the like.

### <Core>

Each of the cores 11 constituting the plastic optical fiber cable of the present embodiment has a diameter of a cross section that is preferably 5 to 500 µm, more preferably 10 to 200 µm, even more preferably 20 to 100 µm, and yet more preferably 20 to 50 µm.

When the diameter of the core is equal to or larger than 5 µm, light emitted from the light-emitting element can be received by the light-receiving element with low loss, and there is a tendency that a communication distance can be increased. When the diameter of the core is equal to or smaller than 500 µm, a decrease in the amount of transmitted light due to bending can be suppressed, and there is a tendency that a sufficient communication distance can be ensured even in a bent state.

A core resin used for the core 11 of the plastic optical fiber is assumed to be an acrylic resin from a viewpoint of using a material having good transparency and low light attenuation.

As the core resin, a polymethyl methacrylate-based resin is preferably used.

The polymethyl methacrylate-based resin refers to a homopolymer of methyl methacrylate or a copolymer containing 50% by mass or more of a methyl methacrylate component.

The polymethyl methacrylate-based resin may be a copolymer containing methyl methacrylate and a component that can be copolymerized with methyl methacrylate. Examples of the component that can be copolymerized with methyl methacrylate include, but are not limited to, acrylic acid esters such as methyl acrylate, ethyl acrylate, and butyl acrylate; methacrylic acid esters such as ethyl methacrylate, propyl methacrylate, and cyclohexyl methacrylate; maleimides such as isopropyl maleimide; and acrylic acid, methacrylic acid, styrene, and the like.

These resins may be used alone or in combination of two or more thereof.

From a viewpoint of melt flow (moldability), the acrylic resin preferably has a weight-average molecular weight (Mw) of 80,000 to 200,000, and more preferably 90,000 to 120,000.

### <First clad layer>

In the plastic optical fiber cable, an entirety of the two or more cores 11 and the peripheries of the cores 11 is surrounded by the first clad layer 12 having a refractive index smaller than that of a resin of the cores.

By providing the first clad layer 12, even when the plastic optical fiber cable is bent, optical signals are propagated within the cable due to reflection at an interface between the first clad layer 12 and the cores 11.

As the resin used for the first clad layer 12, any conventionally known resin can be used as long as it has a refractive index smaller than that of the core resin.

As a difference in refractive index between the core resin and the resin of the first clad layer becomes smaller, signals having higher frequencies can be propagated; however, there is a tendency that the cable becomes more vulnerable to bending. On the other hand, as the difference in refractive index between the core resin and the resin of the first clad layer becomes larger, the cable can be made more resistant to bending; however, there is a tendency that light having a higher frequency becomes less likely to be transmitted. From a viewpoint of enabling propagation of high-frequency signals and a viewpoint of enhancing resistance to bending of the cable, while balancing both characteristics, a refractive index (n) of the resin of the first clad layer 12 is preferably 1.38 ≤ n ≤ 1.48, more preferably 1.40 ≤ n ≤ 1.48, and even more preferably 1.41 ≤ n ≤ 1.48.

Examples of the resin for the first clad layer 12 include, but are not limited to, a fluororesin. By using the fluororesin for the first clad layer 12, transmission loss can be further suppressed.

Examples of the fluororesin include, for example, a fluoromethacrylate-based polymer and a polyvinylidene fluoride-based resin.

Examples of the fluoromethacrylate-based polymer preferably include, but are not limited to, a fluorine-containing acrylate monomers or a methacrylate monomer such as fluoroalkyl methacrylate, fluoroalkyl acrylate, and α-fluoro-fluoroalkyl acrylate, from a viewpoint of achieving high transmittance and excellent heat resistance and moldability. In addition, the polymer may be a copolymer containing a unit derived from a fluorine-containing (meth)acrylate monomer and a unit derived from another component that can be copolymerized therewith, and a copolymer with a unit derived from a copolymerizable hydrocarbon-based monomer such as methyl methacrylate is preferable. Such a copolymer composed of a unit derived from a fluorine-containing (meth)acrylate monomer and a unit derived from a hydrocarbon-based monomer that can be copolymerized therewith is preferable because a refractive index can be controlled.

On the other hand, from a viewpoint of excellent heat resistance and moldability, examples of the polyvinylidene fluoride-based resin preferably include, but are not limited to, a homopolymer of vinylidene fluoride; a copolymer of vinylidene fluoride and at least one monomer selected from the group consisting of tetrafluoroethylene, hexafluoropropene, trifluoroethylene, hexafluoroacetone, perfluoroalkyl vinyl ether, chlorotrifluoroethylene, ethylene, and propylene; and an alloy of a polymer containing a unit derived from such a vinylidene fluoride component and a PMMA-based resin.

As the resin for the first clad layer 12, it is particularly preferable to use one or more resins selected from the group consisting of (1) a tetrafluoroethylene-vinylidene fluoride copolymer, (2) a fluoromethacrylate-based polymer, and (3) an ethylene-tetrafluoroethylene-based copolymer. By using these resins, high-frequency signals can be propagated, sufficient strength against bending of the cable can be ensured, and both characteristics can be balanced.

An average thickness of the first clad layer 12 is preferably equal to or larger than 0.5 µm because it is necessary to reduce crosstalk, and preferably equal to or smaller than 5 µm from a viewpoint of ensuring a sufficient amount of incident light. The average thickness is more preferably 1.0 µm to 4.0 µm, and even more preferably 1.0 µm to 3.0 µm.

The average thickness of the first clad layer 12 can be controlled to fall within the above-described numerical range by adjusting an amount of resin of the first clad layer in a manufacturing process of the plastic optical fiber cable of the present embodiment.

A ratio between the core resin and the resin of the first clad layer is not particularly limited; however, while an increase in the amount of the core resin increases an amount of incident light and extends a communication distance, as a diameter of the plastic optical fiber 13 becomes smaller, a thickness of the first clad layer between the cores becomes thinner, thereby giving rise to the disadvantage of increasing crosstalk and increasing communication errors (with a decrease in BER).

From such a viewpoint, a cross-sectional area ratio between the core and the first clad layer (core/first clad layer) is preferably 99/1 to 70/30, more preferably 98/2 to 80/20, and even more preferably 98/2 to 85/15.

The cross-sectional area ratio between the core and the first clad layer (core/first clad layer) can be controlled to fall within the above-described numerical range by adjusting the amounts of the core resin and the resin of the first clad layer in a core resin distribution chamber and a clad resin distribution chamber of a core composite spinning die in a manufacturing process of the plastic optical fiber.

### <Second clad layer>

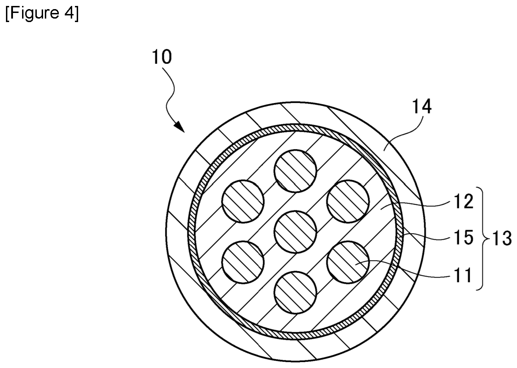

As illustrated in Figure 4, the plastic optical fiber cable of the present embodiment may further include a second clad layer 15 formed on an outer side of the first clad layer 12 so as to surround the first clad layer 12, the second clad layer 15 being composed of a resin different from the resin constituting the first clad layer. A refractive index of the second clad layer 15 is preferably lower than a refractive index of the first clad layer 12. Due to reflection at an interface between the second clad layer 15 and the first clad layer 12, optical signals are propagated within the cable even when the plastic optical fiber cable is bent.

The second clad layer 15 has a function of protecting the plastic optical fiber 13 and maintaining mechanical strength.

The resin of the second clad layer 15 may be any resin different from the resin of the first clad layer 12 and is not particularly limited; however, as a preferable example, a fluororesin having strong adhesion to the resin of the first clad layer is exemplified.

Examples of such a fluororesin include a fluororesin that can be applied to the above-described first clad layer 12 and that is different from the resin constituting the first clad layer 12.

In particular, in a case where the first clad layer 12 is composed of one or more resins selected from the group consisting of (1) a tetrafluoroethylene-vinylidene fluoride copolymer, (2) a fluoromethacrylate-based polymer, and (3) an ethylene-tetrafluoroethylene-based copolymer, the second clad layer 15 is particularly preferably composed of the resin of (1) or (3) from a viewpoint of mechanical strength.

As the resin for the second clad layer 15, a non-fluororesin other than the fluororesin may also be used.

As the non-fluororesin, for example, an acrylic resin is preferable from a viewpoint of mechanical strength.

As the resin for the second clad layer 15, one resin may be used alone, or two or more resins may be used in combination. In particular, a polymethyl methacrylate-based resin is preferable.

The polymethyl methacrylate-based resin refers to a homopolymer of methyl methacrylate or a copolymer containing 50% by mass or more of a methyl methacrylate component.

The polymethyl methacrylate-based resin may be a copolymer containing methyl methacrylate and a component that can be copolymerized with methyl methacrylate. Examples of a component that can be copolymerized with methyl methacrylate include, but are not limited to, acrylic acid esters such as methyl acrylate, ethyl acrylate, and butyl acrylate; methacrylic acid esters such as ethyl methacrylate, propyl methacrylate, and cyclohexyl methacrylate; maleimides such as isopropyl maleimide; and acrylic acid, methacrylic acid, styrene, and the like.

These copolymerizable components may be used alone or in combination of two or more thereof.

From a viewpoint of melt flow (moldability), the acrylic resin used as the resin for the second clad layer 15 preferably has a weight-average molecular weight (Mw) of 80,000 to 200,000, and more preferably 90,000 to 120,000.

A thickness of the second clad layer 15 is preferably equal to or larger than 5 µm from a viewpoint of maintaining mechanical strength, and preferably equal to or smaller than 100 µm from a viewpoint of assemblability of the communication system and from a viewpoint of facilitating alignment between the plastic optical fiber cable and the transmitting and receiving element. The thickness is more preferably 7 to 50 µm, and even more preferably 10 to 40 µm.

### <Third clad layer>

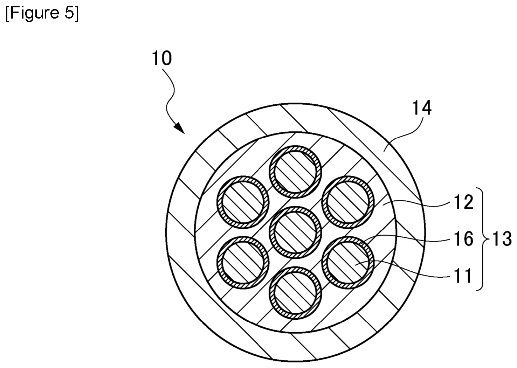

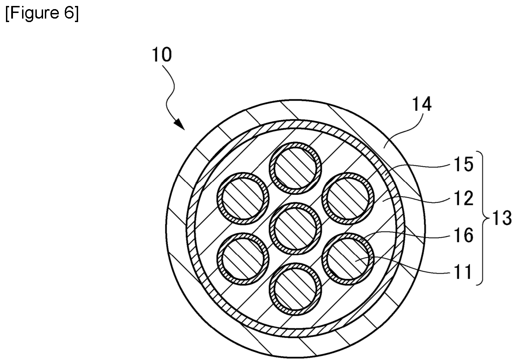

As illustrated in Figure 5 and Figure 6, in the plastic optical fiber cable of the present embodiment, the respective cores 11 may be covered with independent third clad layers 16.

The core 11 having the third clad layer 16 is not limited to the effective core.

The plastic optical fiber cable 10 is formed as a multicore cable by covering the respective cores 11 with the third clad layers 16 and covering these with the first clad layer 12.

In Figure 5, the plastic optical fiber 13 is constituted of the cores 11, the first clad layer 12, and the third clad layers 16.

In Figure 6, the plastic optical fiber 13 is constituted of the cores 11, the first clad layer 12, the second clad layer, and the third clad layers 16.

A resin of the third clad layer 16 may be any resin that has a refractive index lower than that of the core resin and that is different from the resin of the first clad layer 12, and is not particularly limited; however, from a viewpoint of having stronger adhesion to the resin of the first clad layer 12, a fluororesin is preferable.

Examples of such a fluororesin include a fluororesin that can be applied to the above-described first clad layer 12 and that is different from the resin of the first clad layer.

In particular, in a case where the first clad layer 12 is composed of one or more resins selected from the group consisting of (1) a tetrafluoroethylene-vinylidene fluoride copolymer, (2) a fluoromethacrylate-based polymer, and (3) an ethylene-tetrafluoroethylene-based copolymer, the third clad layer 16 is particularly preferably composed of the resin of (1) or (3) from a viewpoint of mechanical strength.

### <Covering layer>

As illustrated in Figure 3 to Figure 6, the plastic optical fiber cable of the present embodiment includes the covering layer 14 on an outer side of the plastic optical fiber 13.

A constituent material of the covering layer 14 may be any resin and is not particularly limited; however, from a viewpoint of protecting the plastic optical fiber cable of the present embodiment, a resin having excellent mechanical strength or a resin having flame retardancy is preferable, and a resin having excellent mechanical strength is particularly preferable.

Examples of a resin having excellent mechanical strength include, but are not limited to, a polyamide-based resin, a polyethylene-based resin, a polypropylene-based resin, and a polyvinylidene fluoride-based resin, and such resins tend to be capable of exhibiting a function of protecting the plastic optical fiber cable from external force such as lateral pressure and also exhibiting an effect of mitigating external impacts. The resin constituting the covering layer 14 preferably has sufficient strength for protection from external force, and in particular, a resin having a tensile yield strength (JIS K7113) of approximately 20 MPa or more is preferable. Examples of a resin having such strength include, for example, a polyamide 12-based resin, a crosslinked polyethylene-based resin, a crosslinked polyethylene-based resin, and a polypropylene-based resin.

On the other hand, as a resin having flame retardancy, it is preferable that the resin be composed of a resin composition that satisfies the UL VW-1 standard. By using such a resin composition for the covering layer 14, it is possible to obtain a plastic optical fiber cable in which transmission loss is less likely to deteriorate in a high-temperature environment.

It is presumed that satisfying the UL VW-1 standard is useful for preventing deterioration of transmission loss in a high-temperature environment, as described below.

That is, a resin having high flame retardancy is generally presumed to have high heat resistance, and it is considered that having flame retardancy sufficient to satisfy this standard contributes to improvement in heat resistance of the plastic optical fiber cable. Therefore, it is preferable that a resin material constituting the covering layer used for the plastic optical fiber cable of the present embodiment satisfies the UL VW-1 standard.

Examples of the resin material used for the covering layer include a polyethylene-based resin, a flame-retardant polyethylene-based resin, a polyamide-based resin, a vinyl chloride-based resin, a fluororesin such as polyvinylidene fluoride, a tetrafluoroethylene-ethylene copolymer (ETFE), a tetrafluoroethylene-perfluoroalkyl vinyl ether copolymer (PFA), and a silicone resin.

In particular, a flame-retardant polyethylene-based resin obtained by blending a flame retardant with a polyethylene-based resin to impart flame retardancy is preferable also from a viewpoint of environmental consideration, since the resin does not contain halogen.

The flame-retardant polyethylene-based resin is preferably a resin that contains, for example, (A) at least one copolymer selected from the group consisting of an ethylene-α-olefin copolymer, an ethylene-vinyl acetate copolymer, and an ethyleneethyl acrylate copolymer, (B) high-density polyethylene modified with an unsaturated carboxylic acid or a derivative thereof, (C) magnesium hydroxide, and (D) red phosphorus, but is not limited thereto.

Furthermore, from a viewpoint of further improving flame retardancy, it is more preferable to contain (E) melamine isocyanurate.

In addition, from a viewpoint of improving heat resistance, a polyamide-based resin is preferable.

Examples of the polyamide-based resin include a polyamide 66-based resin, a polyamide 6-based resin, a polyamide 11-based resin, a polyamide 12-based resin, and a polyamide 10-10-based resin. Among these, the polyamide 11-based resin and the polyamide 12-based resin are excellent in heat resistance and are preferable. The polyamide 10-10-based resin can be manufactured from a plant-derived raw material such as castor oil, and is preferable from a viewpoint of carbon dioxide reduction.

### <Other components>

Each portion constituting the plastic optical fiber cable of the present embodiment may further contain a predetermined additive, within a range that does not impair the effects of the present embodiment.

Such an additive can be selected according to a purpose of use, and examples thereof include, but are not limited to, a colorant such as carbon black, an antioxidant, an ultraviolet absorber, a light stabilizer, a metal deactivator, a lubricant, a flame retardant other than those described above, a flame-retardant auxiliary, a filler, and the like.

Examples of a case where an additive is used include, for example, a case where carbon black is added to the first to the third clad layers and the covering layer for the purpose of preventing light used for communication from leaking from the plastic optical fiber side.

### (Other configurations)

The plastic optical fiber cable of the present embodiment includes, as described above, the plastic optical fiber including one or two or more cores and the first clad layer constituted of at least one layer formed on an outer periphery of the core, and the covering layer formed on an outer periphery of the plastic optical fiber.

The plastic optical fiber cable of the present embodiment may further include an outer covering layer to be described later, and the number of lines can also be appropriately selected.

### <Outer covering layer>

The plastic optical fiber cable of the present embodiment can use the above-described covering layer as an outermost surface layer, or can be used as a more reinforced optical fiber cable by providing, on an outer periphery thereof, an outer covering layer (also referred to as an "outer jacket") composed of a thermoplastic resin such as nylon 12, soft nylon, polyethylene, polyvinyl chloride, polypropylene, or a fluororesin.

In addition, the plastic optical fiber cable of the present embodiment, a plastic optical fiber cable other than the present embodiment, a metal cable, and a material such as a reinforcing member may be collectively covered with an outer covering layer to form a composite cable.

### (Physical property of plastic optical fiber cable)

### <Static bending loss>

The plastic optical fiber cable of the present embodiment is excellent in strength resistance to bending and in reduction of bending loss, and a static bending loss thereof at a bending radius r = 3 mm is assumed to be equal to or smaller than 0.2 dB from a viewpoint of suppressing communication errors. Specifically, when the cable is bent by 90 degrees along a cylinder having a radius of 3 mm, a difference in amount of light before bending and after bending is assumed to be equal to or smaller than 0.2 dB. Preferably, the difference is equal to or smaller than 0.15 dB, and more preferably equal to or smaller than 0.1 dB.

The static bending loss of the plastic optical fiber cable can be controlled to fall within the numerical range described above by adjusting a diameter of each core of the optical fiber cable and a refractive index of each clad layer.

### [Method for manufacturing plastic optical fiber cable]

A method for manufacturing the plastic optical fiber cable of the present embodiment is not particularly limited, and a known method may be used.

For example, a method can be preferably used in which a covering layer is formed on an outer side of a plastic optical fiber manufactured by a known composite spinning method, the covering layer being composed of the polyethylene-based resin described above, polyvinyl chloride, polyvinylidene fluoride, a tetrafluoroethylene-ethylene copolymer (ETFE), a tetrafluoroethylene-perfluoroalkyl vinyl ether copolymer (PFA), and a silicone resin, which are heat-melted by a crosshead die.

### [Active optical cable]

The optical fiber communication system of the present embodiment can be used by being mounted on an active optical cable (AOC). As a result, a shortdistance optical communication system that rapidly transmits a large amount of information can be easily applied to various servers and the like.

### Examples

The following specifically describes the present embodiment with specific examples and comparative examples, but the present embodiment is not limited to the following examples.

Physical property values used in the present specification, and evaluated physical property values evaluated in the examples and comparative examples described later, are each obtained by the following measurement method and evaluation method.

### [Physical property of plastic optical fiber cable]

### (Static bending loss)

For each example and comparative example, a difference in amount of light before bending and after bending, when the cable was bent by 90 degrees along a cylinder having a radius of 3 mm, was measured as a static bending loss.

A sample having a measured value equal to or smaller than 0.2 dB was determined to be acceptable.

### [Evaluation of optical fiber communication system]

### (Communication feasibility determination)

As a light-emitting element, a micro LED array in which 256 (a = 256) micro LED elements were arranged at intervals of 30 µm was used.

As a light-receiving element, a silicon photodiode array in which x photodiodes were arranged was used.

Data divided into x pieces were generated by "FPGA manufactured by Xilinx, Inc.", communication was performed at a speed of 2 Gb/s per lane, and a bit error rate (BER) was measured.

If a measurement result was larger than 10⁻¹⁰, it was determined to be defective (unacceptable); if the measurement result was from 10⁻¹⁰ to 10⁻¹², it was determined to be good (acceptable); and if the measurement result was smaller than 10⁻¹², it was determined to be excellent (acceptable).

### [Example 1]

Polymethyl methacrylate (refractive index: 1.491) was used as a resin constituting a core (core resin), and a tetrafluoroethylene-vinylidene fluoride copolymer (refractive index: 1.40) was used as a resin constituting a first clad layer (clad resin). The core resin and the clad resin were supplied to a core resin distribution chamber and a clad resin distribution chamber of a 613-core composite spinning die at a cross-sectional area ratio of core/first clad layer = 80/20, thereby manufacturing, by composite spinning, a plastic optical fiber having 613 cores (the number of effective cores b = 512) with a diameter of 1 mm.

An average thickness of the first clad layer was 2 µm.

The refractive index was measured by using an Abbe refractometer (manufactured by Atago Co., Ltd., "Abbe Refractometer Model 1") with a sodium D line as a light source in a thermostatic chamber at 23°C.

Furthermore, the spun plastic optical fiber was covered with a covering layer composed of a polyethylene resin to have an outer diameter of 2.2 mm at a molding temperature from 130°C to 200°C, thereby producing a 613-core plastic optical fiber cable.

When the plastic optical fiber cable was bent by 90° at a bending radius r = 3 mm and a static bending loss was measured, the static bending loss was 0.03 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 2.0 × 10⁻¹², which was good.

### [Example 2]

As a core composite spinning die, a 1303-core composite spinning die was used, and a plastic optical fiber having 1303 cores (the number of effective cores b = 1024) with a diameter of 1 mm was manufactured by composite spinning.

The average thickness of the first clad layer was 1 µm.

Except for the above, the plastic optical fiber cable was manufactured under the same conditions as those in [Example 1] described above.

When the plastic optical fiber cable was bent by 90° at a bending radius r = 3 mm and a static bending loss was measured, the static bending loss was 0.01 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 9.1 × 10⁻¹³, which was excellent.

### [Example 3]

A fluoromethacrylate-based polymer (refractive index: 1.42) was used as a resin constituting the first clad layer, and a 1303-core composite spinning die was used as a core composite spinning die, thereby manufacturing, by composite spinning, a plastic optical fiber having 1303 cores (the number of effective cores b = 1024) with a diameter of 1 mm.

The average thickness of the first clad layer was 1 µm.

Except for the above, the optical fiber communication system was constructed under the same conditions as those in [Example 2] described above, and a communication test was performed.

When the plastic optical fiber cable was bent by 90° at a bending radius r = 3 mm and a static bending loss was measured, the static bending loss was 0.02 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 8.2 × 10⁻¹³, which was excellent.

### [Example 4]

An ethylene-tetrafluoroethylene-based copolymer (refractive index: 1.39) was used as a resin constituting the first clad layer. As a core composite spinning die, a 1303-core composite spinning die was used, and a plastic optical fiber having 1303 cores (the number of effective cores b = 1024) with a diameter of 1 mm was manufactured by composite spinning.

An average thickness of the first clad layer was 1 µm.

Except for the above, the optical fiber communication system was constructed under the same conditions as those in [Example 2] described above, and a communication test was performed.

When the plastic optical fiber cable was bent by 90° at a bending radius r = 3 mm and a static bending loss was measured, the static bending loss was 0.01 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 9.8 × 10⁻¹³, which was excellent.

### [Example 5]

As a core composite spinning die, a 3505-core composite spinning die was used, and a plastic optical fiber having 3505 cores (the number of effective cores b = 2560) with a diameter of 2.5 mm was manufactured by composite spinning.

An average thickness of the first clad layer was 0.8 µm.

Except for the above, the plastic optical fiber cable was manufactured under the same conditions as those in [Example 1] described above.

When the plastic optical fiber cable was bent by 90° at a bending radius r = 3 mm and a static bending loss was measured, the static bending loss was 0.1 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 7.8 × 10⁻¹³, which was excellent.

### [Example 6]

The cross-sectional area ratio (core/first clad layer) between the core and the first clad layer was set to 90/10.

A plastic optical fiber having 1303 cores (the number of effective cores b = 1024) with a diameter of 1 mm was manufactured by composite spinning.

An average thickness of the first clad layer was 0.8 µm.

Except for the above, the plastic optical fiber cable was manufactured under the same conditions as those in [Example 2] described above.

When the plastic optical fiber cable was bent by 90° at a bending radius r = 3 mm and a static bending loss was measured, the static bending loss was 0.01 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 9.2 × 10⁻¹³, which was excellent.

### [Example 7]

The cross-sectional area ratio (core/first clad layer) between the core and the first clad layer was set to 60/40, and the plastic optical fiber having 613 cores (the number of effective cores b = 512) with a diameter of 1 mm was manufactured by composite spinning.

An average thickness of the first clad layer was 4 µm.

Except for the above, the plastic optical fiber cable was manufactured under the same conditions as those in [Example 1] described above.

When the plastic optical fiber cable was bent by 90° at a bending radius r = 3 mm and a static bending loss was measured, the static bending loss was 0.03 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 5.0 × 10⁻¹², which was good.

### [Example 8]

A fluoromethacrylate-based polymer (refractive index: 1.42) was used as a resin constituting the first clad layer, and except for that, the plastic optical fiber cable was manufactured under the same conditions as those in [Example 5] described above.

When the plastic optical fiber cable was bent by 90° at a bending radius r = 3 mm and a static bending loss was measured, the static bending loss was 0.1 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 5.2 × 10⁻¹³, which was excellent.

### [Example 9]

As a core composite spinning die, a 3505-core composite spinning die was used, and a plastic optical fiber having 3505 cores (the number of effective cores b = 2560) with a diameter of 1.8 mm was manufactured by composite spinning.

An average thickness of the first clad layer was 1.0 µm.

Except for the above, the plastic optical fiber cable was manufactured under the same conditions as those in [Example 1] described above.

When the plastic optical fiber cable was bent by 90° at a bending radius r = 3 mm and a static bending loss was measured, the static bending loss was smaller than 0.1 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 6.8 × 10⁻¹³, which was excellent.

### [Example 10]

A polyamide 12 resin was used as a material for the covering layer. Except for that, the plastic optical fiber cable was manufactured under the same conditions as those in [Example 9].

When the plastic optical fiber cable was bent by 90° at a bending radius r = 3 mm and a static bending loss was measured, the static bending loss was smaller than 0.1 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 6.8 × 10⁻¹³, which was excellent.

### [Example 11]

A flame-retardant polyethylene-based resin was used as a material for the covering layer. Except for that, the plastic optical fiber cable was manufactured under the same conditions as those in [Example 9].

When the plastic optical fiber cable was bent by 90° at a bending radius r = 3 mm and a static bending loss was measured, the static bending loss was smaller than 0.1 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 6.8 × 10⁻¹³, which was excellent.

### [Example 12]

As a core composite spinning die, a 7375-core composite spinning die was used, and a plastic optical fiber having 7375 cores (the number of effective cores b = 5380) with a diameter of 1.8 mm was manufactured by composite spinning.

An average thickness of the first clad layer was 1.0 µm.

Except for the above, the plastic optical fiber cable was manufactured under the same conditions as those in [Example 1] described above.

When the plastic optical fiber cable was bent by 90° at a bending radius r = 3 mm and a static bending loss was measured, the static bending loss was smaller than 0.1 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 5.9 × 10⁻¹³, which was excellent.

### [Example 13]

As a core composite spinning die, a 13003-core composite spinning die was used, and a plastic optical fiber having 13003 cores (the number of effective cores b = 9500) with a diameter of 1.8 mm was manufactured by composite spinning.

An average thickness of the first clad layer was 1.0 µm.

Except for the above, the plastic optical fiber cable was manufactured under the same conditions as those in [Example 1] described above.

When the plastic optical fiber cable was bent by 90° at a bending radius r = 3 mm and a static bending loss was measured, the static bending loss was smaller than 0.1 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 5.7 × 10⁻¹³, which was excellent.

### [Example 14]

As a core composite spinning die, a 3505-core multilayer composite spinning die was used, and a plastic optical fiber having 3505 cores (the number of effective cores b = 2560) with a diameter of 1.8 mm and including a second clad layer was manufactured by composite spinning. A fluoromethacrylate-based polymer (refractive index: 1.42) was used as a resin constituting the first clad layer, and a tetrafluoroethylene-vinylidene fluoride copolymer (refractive index: 1.40) was used as a resin constituting the second clad layer.

An average thickness of the first clad layer was 1.0 µm, and an average thickness of the second clad layer was 20 µm.

Except for the above, the plastic optical fiber cable was manufactured under the same conditions as those in [Example 1] described above.

When the plastic optical fiber cable was bent by 90° at a bending radius r = 3 mm and a static bending loss was measured, the static bending loss was smaller than 0.1 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 5.7 × 10⁻¹³, which was excellent.

### [Example 15]

As a core composite spinning die, a 7375-core composite spinning die was used, and a plastic optical fiber having 7375 cores (the number of effective cores b = 5380) with a diameter of 1.8 mm and including a second clad layer was manufactured by composite spinning. A fluoromethacrylate-based polymer (refractive index: 1.42) was used as a resin constituting the first clad layer, and a tetrafluoroethylene-vinylidene fluoride copolymer (refractive index: 1.40) was used as a resin constituting the second clad layer.

An average thickness of the first clad layer was 1.0 µm, and an average thickness of the second clad layer was 22 µm.

Except for the above, the plastic optical fiber cable was manufactured under the same conditions as those in [Example 1] described above.

When the plastic optical fiber cable was bent by 90° at a bending radius r = 3 mm and a static bending loss was measured, the static bending loss was smaller than 0.1 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 5.9 × 10⁻¹², which was excellent.

### [Example 16]

As a core composite spinning die, a 13003-core composite spinning die was used, and a plastic optical fiber having 13003 cores (the number of effective cores b = 9500) with a diameter of 1.8 mm and including a second clad layer was manufactured by composite spinning. A fluoromethacrylate-based polymer (refractive index: 1.42) was used as a resin constituting the first clad layer, and a tetrafluoroethylene-vinylidene fluoride copolymer (refractive index: 1.40) was used as a resin constituting the second clad layer.

An average thickness of the first clad layer was 1.0 µm, and an average thickness of the second clad layer was 21 µm.

Except for the above, a plastic optical fiber cable was manufactured under the same conditions as those in [Example 1] described above.

When the plastic optical fiber cable was bent by 90° at a bending radius r = 3 mm and a static bending loss was measured, the static bending loss was smaller than 0.1 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 5.8 × 10⁻¹³, which was excellent.

### [Example 17]

As a core composite spinning die, a 3505-core multilayer composite spinning die was used, and a plastic optical fiber having 3505 cores (the number of effective cores b = 2560) with a diameter of 1.8 mm and including a second clad layer and a third clad layer was manufactured by composite spinning. A fluoromethacrylate-based polymer (refractive index: 1.42) was used as a resin constituting the first clad layer, and a tetrafluoroethylene-vinylidene fluoride copolymer (refractive index: 1.40) was used as a resin constituting the second clad layer and the third clad layer.

An average thickness of the first clad layer was 1.0 µm, an average thickness of the second clad layer was 20 µm, and an average thickness of the third clad layer was 1.0 µm.

Except for the above, the plastic optical fiber cable was manufactured under the same conditions as those in [Example 1] described above.

When the plastic optical fiber cable was bent by 90° at a bending radius r = 3 mm and a static bending loss was measured, the static bending loss was smaller than 0.1 dB.

An optical fiber communication system including a 10 m plastic optical fiber cable, a (a = 256) micro LEDs as light-emitting elements at a communication wavelength of 463 nm, and a photodiode array including 256 (x = 256) photodiodes as light-receiving elements was constructed, and a communication test was performed. As a result, a bit error rate (BER) was 6.3 × 10⁻¹³, which was excellent.

### [Comparative example 1]

As a plastic optical fiber cable, HMCKU-1000P manufactured by Asahi Kasei Corporation (number of cores: 19, refractive index of the first clad layer: 1.40) was used.

When the plastic optical fiber cable was bent by 90° at a bending radius r = 3 mm and a static bending loss was measured, the static bending loss was 1.7 dB.

An optical fiber communication system including a 10 m plastic optical fiber cable, a (a = 8) micro LEDs as light-emitting elements at a communication wavelength of 463 nm, and a photodiode array including 8 (x = 8) photodiodes as light-receiving elements was constructed, and a communication test was performed. As a result, a bit error rate (BER) was 0.7 × 10⁻⁸, which was good.

### [Comparative example 2]

As an optical fiber cable, eight quartz glass fiber bundles were used.

When the optical fiber cable was bent by 90° at a bending radius r = 3 mm and a static bending loss was measured, the optical fiber cable was broken.

An optical fiber communication system including a 10 m optical fiber cable, a (a = 8) micro LEDs as light-emitting elements at a communication wavelength of 463 nm, and a photodiode array including 8 photodiodes as light-receiving elements was constructed, and a communication test was performed. As a result, a bit error rate (BER) was 1.1 × 10⁻¹³, which was good.

The present application is based on a Japanese patent application (Japanese Patent Application No. 2023-180468) filed with the Japan Patent Office on October 19, 2023, the contents of which are incorporated herein by reference.

### Industrial Applicability

The plastic optical fiber of the present invention has industrial applicability as a medical endoscope and an industrial endoscope.

### Reference Signs List

1, 2 transmitting and receiving element
3, 3' light-emitting element
4, 4' light-receiving element
5, 6 IC chip
7, 8 optical refraction device
10 plastic optical fiber cable
11 core
12 first clad layer
13 plastic optical fiber
14 covering layer
15 second clad layer
16 third clad layer
A, B transmitting and receiving unit

## Claims

1. An optical fiber communication system comprising:
a plastic optical fiber cable;
a light-emitting element composed of a micro LED array including a (a ≥ 2) micro LEDs; and
a light-receiving element composed of a photodiode array including a or more photodiodes, wherein
the plastic optical fiber cable further includes a covering layer on an outer side of a plastic optical fiber composed of two or more cores and a first clad layer surrounding the cores,
b (a ≤ b) or more cores of the two or more cores are effective cores that receive light from the light-emitting element,
the cores are composed of an acrylic resin, and
a static bending loss of the plastic optical fiber cable at a bending radius r = 3 mm is equal to or smaller than 0.2 dB.

2. The optical fiber communication system according to claim 1, wherein the a and the b satisfy 2a ≤ b ≤ 40a.

3. The optical fiber communication system according to claim 1, wherein the a and the b satisfy 3a ≤ b ≤ 10a.

4. The optical fiber communication system according to claim 1, wherein the a and the b satisfy 3a ≤ b ≤ 5a.

5. The optical fiber communication system according to claim 1, wherein an average thickness of the first clad layer is 0.5 µm to 5 µm.

6. The optical fiber communication system according to claim 1, wherein a cross-sectional area ratio between the core and the first clad layer (core/first clad layer) is 99/1 to 70/30.

7. The optical fiber communication system according to claim 1, wherein the first clad layer is composed of one or more resins selected from the group consisting of (1) tetrafluoroethylene-vinylidene fluoride copolymer, (2) fluoromethacrylate-based polymer, and (3) ethylene-tetrafluoroethylene-based copolymer.

8. The optical fiber communication system according to claim 1, comprising:
a second clad layer surrounding the first clad layer, wherein
the second clad layer is composed of a fluororesin that is different from a resin constituting the first clad layer.

9. The optical fiber communication system according to claim 1, comprising:
a second clad layer surrounding the first clad layer, wherein
the second clad layer is composed of a non-fluororesin that is different from a resin constituting the first clad layer.

10. The optical fiber communication system according to claim 8, wherein a refractive index of the second clad layer is lower than a refractive index of the first clad layer.

11. The optical fiber communication system according to claim 9, wherein a refractive index of the second clad layer is lower than a refractive index of the first clad layer.

12. The optical fiber communication system according to claim 1, comprising independent third clad layers around the respective cores.

13. The optical fiber communication system according to claim 1, wherein a refractive index (n) of the first clad layer satisfies 1.38 ≤ n ≤ 1.48.

14. The optical fiber communication system according to claim 1, wherein
the covering layer is composed of
a resin selected from the group consisting of a polyethylene-based resin, a flame-retardant polyethylene-based resin, a polyamide-based resin, and a vinyl chloride-based resin.

15. A plastic optical fiber cable used in an optical fiber communication system, the optical fiber communication system including a plastic optical fiber cable, a light-emitting element composed of a micro LED array including a (a ≥ 2) micro LEDs, and a light-receiving element composed of a photodiode array including a or more photodiodes, the plastic optical fiber cable comprising:
a plastic optical fiber composed of two or more cores and a first clad layer surrounding the cores, and a covering layer on an outer side of the plastic optical fiber, wherein
b (a ≤ b) or more cores of the two or more cores are effective cores that receive light from the light-emitting element,
the cores are composed of an acrylic resin, and
a static bending loss at a bending radius r = 3 mm is equal to or smaller than 0.2 dB.

16. An active optical cable equipped with the optical fiber communication system according to any one of claims 1 to 14.
